# FASCICULE DE BREVET EUROPEEN

(11) **EP 2 539 201 B1**
(45) Date de publication et mention de la délivrance du brevet: **01.01.2014**
(21) Numéro de dépôt: 11712617.7
(22) Date de dépôt: 22.02.2011
(51) Int. Cl.: B62B 9/00, B60B 33/02, B60B 33/00, B62B 9/08, B62B 7/04

(54) **CHÂSSIS DE POUSSETTE, NOTAMMENT POUR TRANSPORTER UN ENFANT**
WAGENRAHMEN, INSBESONDERE KINDERWAGENRAHMEN
STROLLER FRAME, ESPECIALLY FOR TRANSPORTING A CHILD

(30) Priorité: 23.02.2010 FR 1051280
(43) Date de publication de la demande: 02.01.2013
(73) Titulaire: BABYZEN, 13770 Venelles (FR)
(72) Inventeur: CHAUDEURGE, Jean-Michel, François, 83170 Tourves (FR)
(74) Mandataire: Grand, Guillaume
(86) Numéro de dépôt international: PCT/FR2011/050365
(87) Numéro de publication internationale: WO 2011/104474

(56) Documents cités:
- EP-A1- 2 138 375
- WO-A1-97/24235
- GB-A- 2 240 266
- US-A- 2 799 514

## Description

La présente invention concerne un châssis de poussette. Elle concerne en particulier le domaine des poussettes de transport d'un enfant en bas âge.

Pour pousser sur le sol une poussette, son châssis est typiquement équipé de roues ou roulettes. L'invention s'intéresse plus particulièrement aux châssis de poussette dont au moins certaines des roues, typiquement la ou les roues avant, présentent un axe de roulement sur le sol, dont la position n'est pas figée par rapport au cadre du châssis, mais qui, au contraire, est prévu pivotant autour d'un axe sensiblement vertical. Autrement dit, la ou chacune de ces roues est montée sur le cadre du châssis de manière librement orientable, via un ensemble d'articulation mécanique ad hoc. La capacité de pivotement de cette ou ces roues augmente la maniabilité du châssis sur le sol, en particulier pour tourner ou faire demi-tour. Un exemple est fourni par WO-A-2009/092970.

Toutefois, une telle capacité de pivotement est à proscrire dans certaines circonstances : lorsque le châssis est poussé sur un terrain accidenté ou caillouteux, il est préférable de figer l'orientation de toutes les roues de sorte que leur axe de roulement soit maintenu perpendiculaire à la direction d'avancée du châssis, faute de quoi des vibrations, voire des secousses sont transmises dans le cadre de la poussette. De même, dans le cas des châssis de poussette à roues escamotables, il est généralement conseillé de neutraliser le pivotement des roues par rapport au cadre du châssis avant de les escamoter.

En pratique, la neutralisation du pivotement des roues est généralement réalisée en bloquant mécaniquement le mécanisme d'articulation entre les roues et le cadre du châssis : pour ce faire, l'utilisateur doit agir manuellement sur un ou plusieurs organes de commande dédiés. EP-A-2 138 375, sur lequel est basé le préambule de la revendication 1, fournit un exemple de ce genre d'organes de commande dédiés. En pratique, l'actionnement de ces organes est fastidieux et source d'erreurs, voire d'insécurité. Par ailleurs, lorsque le mécanisme d'articulation précité est ainsi neutralisé, il encaisse des contraintes souvent importantes, induisant des risques de disfonctionnement, notamment de grippage, empêchant le rétablissement du pivotement des roues.

De plus, même dans des conditions de roulement qui semblent favorables au libre pivotement des roues par rapport au cadre du châssis, il n'est pas exclu que des sollicitations pendulaires, sources de vibrations et d'usure, soient régulièrement appliquées au mécanisme d'articulation entre les roues orientables et le cadre, par exemple lorsque le châssis est poussé suivant un virage serré ou bien lorsque les roues sont brutalement réappliquées contre le sol après en avoir été temporairement décollées, notamment pour franchir un trottoir. On parle alors typiquement d'un effet de guidonnage entre la roue et le cadre.

Dans d'autres domaines que celui des châssis de poussette, on a proposé des systèmes d'anti-guidonnage. En particulier, WO-A-97/24235 propose de freiner les mouvements de rotation libre d'un roulement à billes, interposé entre un cadre et une de ses roues pivotantes, par, d'une part, une série de premières platines, qui sont liées en rotation, autour de l'axe de pivotement de la roue, à une fourche de cette roue, et d'autre part, une série de seconde platines qui sont liées en rotation, autour de l'axe de pivotement, à un arbre solidarisé au cadre. Les premières et les secondes platines sont toutes agencées à l'aplomb axial du roulement à billes, en étant accolées les unes aux autres de manière alternée, tout en baignant dans un lubrifiant : les interfaces de lubrifiant, ainsi obtenues entre chacune des paires de première et seconde platines accolées, opposent une résistance au cisaillement lorsqu'un phénomène de guidonnage tend à se produire. Eu égard à l'agencement des platines et à leur nombre important, cette solution est particulièrement volumineuse suivant la direction de l'axe de pivotement. De plus, la présence indispensable du lubrifiant oblige à prévoir des éléments d'étanchéité et fait courir le risque de disfonctionnement en cas de fuite.

Le but de la présente invention est de proposer un châssis de poussette à roues orientables, dont le contrôle de l'orientation des roues est amélioré de manière simple et efficace en ce qui concerne son confort et sa sécurité.

A cet effet, l'invention a pour objet un châssis de poussette, notamment pour transporter un enfant, tel que défini à la revendication 1.

L'idée à la base de l'invention est de proscrire des ensembles d'articulation que l'on peut totalement bloquer de manière réversible par des organes de commande nécessitant une action positive de l'utilisateur, au profit de deux platines accolées définissant entre elles une interface plane de contact glissant freiné par friction. Ces platines produisent un effet d'anti-guidonnage entre la roue et le cadre du châssis de poussette : l'interface de contact précitée limite, voire inhibe la transmission entre la roue et le cadre de vibrations ou d'oscillations pendulaires autour de l'axe de pivotement. En effet, les deux platines de l'ensemble d'articulation conforme à l'invention sont montées glissantes l'une contre l'autre, ce qui permet à l'utilisateur de faire pivoter la roue vis-à-vis du cadre du châssis lorsqu'il pousse ce châssis suivant une trajectoire courbe. En revanche, le glissement relatif des platines est freiné par friction de contact entre elles. De cette façon, aucune accélération ou décélération brusque d'une des platines par rapport à l'autre n'est permise, ce qui évite notamment le guidonnage de la roue vis-à-vis du cadre. Autrement dit, les platines de l'ensemble d'articulation conforme à l'invention adoucissent le pivotement de la roue, en garantissant ainsi sécurité et confort pour l'enfant transporté par le châssis de poussette.

En pratique, on comprend que le comportement cinématique entre les platines peut être prévu davantage glissant que frottant, ou inversement, selon l'effet plus ou moins adouci que l'on souhaite appliquer au pivotement de la roue vis-à-vis du cadre. On peut jouer sur ce compromis entre glissement et friction moyennant le choix des matériaux constituant les platines, au moins pour ce qui concerne leur partie délimitant leur surface plane accolée, ainsi que moyennant le niveau de rugosité de ces surfaces. Dans tous les cas, les platines conformes à l'invention présentent l'avantage de transmettre entre elles des contraintes réparties sur une grande interface de contact, limitant ainsi leur usure, grâce à leur forme annulaire, entourant extérieurement le ou les paliers de guidage en rotation libre entre le cadre et la roue. En pratique, on comprend que les corps annulaires des platines n'ont pas à être situés, suivant l'axe de pivotement, rigoureusement au même niveau qu'un des paliers : il est seulement nécessaire que, en projection dans un plan perpendiculaire à l'axe de pivotement, l'essentiel, voire la totalité des corps annulaires des platines soit positionné radialement à l'extérieur du contour périphérique extérieur des paliers de rotation libre. De cette façon, l'effet d'anti-guidonnage produit à l'interface de contact entre les platines est accentué vis-à-vis des paliers, tout en prévoyant avantageusement que l'ensemble d'articulation reste compact suivant la direction de l'axe de pivotement. La transmission des efforts entre les corps annulaires des platines est rendue efficace et pérenne sous l'action des moyens élastiques plaquant ces corps l'un contre l'autre. De surcroit, l'agencement à platines conforme à l'invention s'avère économique.

D'autres caractéristiques avantageuses du châssis de poussette conforme à l'invention, prises isolément ou suivant toutes les combinaisons techniquement possibles, sont spécifiées aux revendications dépendantes 2 à 15.

L'invention sera mieux comprise à la lecture de la description qui va suivre, donnée uniquement à titre d'exemple et faite en se référant aux dessins sur lesquels :
- la figure 1 est une vue schématique en élévation latérale d'un châssis de poussette conforme à l'invention ;
- la figure 2 est une vue en perspective éclatée d'une partie avant du châssis de poussette de la figure 1 ; et
- la figure 3 est une coupe dans le plan III de la figure 2, montrant la partie avant du châssis de poussette dans son état assemblé.

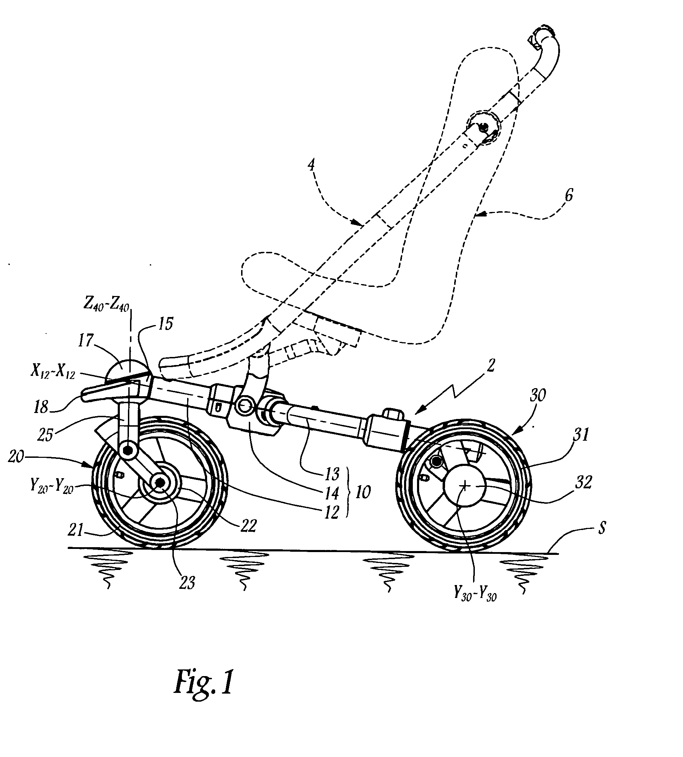

Sur la figure 1 est représenté un châssis 2 d'une poussette destinée à transporter un enfant en bas âge, en étant poussée sur le sol S par un adulte. Comme représenté de manière très schématique à la figure 1, cette poussette comporte, en plus du châssis 2, un support 4 sur lequel est ici rapportée et fixée une assise 6 dans laquelle l'enfant transporté se tient assis, étant remarqué que, pour la clarté du dessin, l'enfant n'est pas représenté. En variante non représentée, l'assise 6 est remplacée par un couchage, permettant de transporter l'enfant en position allongée, ou par un autre élément de transport analogue non limitatif de la présente invention. En pratique, le support 4 peut présenter des structures très diverses, incluant ou non des composants articulés les uns par rapport aux autres, étant entendu que chacune de ces structures est avantageusement supportée par le châssis 2 de manière articulée et/ou amovible, en particulier à des fins de pliage et/ou de stockage de la poussette lors des périodes durant lesquelles celle-ci n'est pas utilisée pour transporter l'enfant.

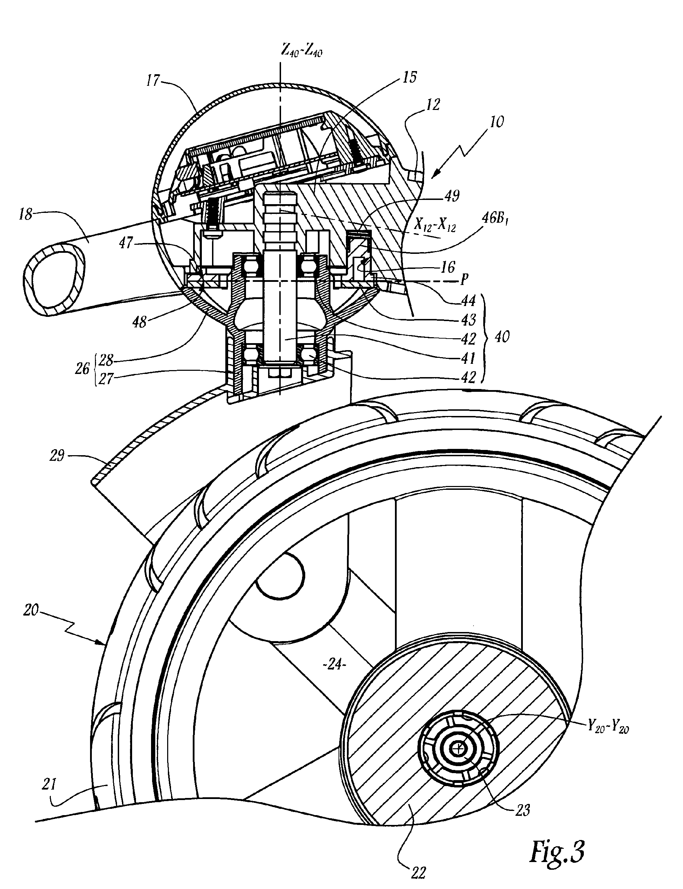

Par commodité, la suite de la description est orientée par rapport au châssis de poussette 2 lorsque ce dernier est dans sa configuration de service illustrée à la figure 1, de sorte que les termes « supérieur » et « haut » désignent une direction dirigée à l'opposé du sol S et correspondant à la partie haute des figures 1 à 3, tandis que les termes « inférieur » et « bas » désignent une direction opposée. De même, les termes « avant » et « arrière » s'entendent par rapport à la direction normale d'avancée de la poussette, c'est-à-dire la direction suivant laquelle cette poussette est normalement poussée, de sorte que l'avant correspond à la partie gauche des figures 1 et 3.

Le châssis 2 comporte un cadre rigide non articulé 10. Dans l'exemple de réalisation considéré sur les figures, le cadre 10 inclut un unique bras avant 12 s'étendant en longueur suivant la direction antéropostérieure du châssis 2. L'axe longitudinal central X₁₂-X₁₂ de ce bras 12 appartient avantageusement à un plan vertical médian antéropostérieur du châssis 2. Le cadre 10 inclut également une partie arrière 13 reliée rigidement au bras avant 12 par un tronc central 14 sur lequel est monté le support 4. De manière non visible sur les figures, la partie arrière 13 du cadre 10 est par exemple constituée de deux bras distincts, qui s'étendent globalement suivant la direction antéropostérieure du châssis, en étant sensiblement symétriques l'un de l'autre par rapport au plan vertical médian antéropostérieur de ce châssis : pour plus de détail sur cet aspect du châssis 2, le lecteur pourra se reporter à WO-A-2009/092970.

Pour pousser la poussette sur le sol S, le châssis 2 est pourvu de roues d'appui au sol, à savoir une roue avant 20 et des roues arrière 30 dont une seule est visible sur la figure 1. Ces roues 20 et 30 sont prévues rotatives sur elles-mêmes autour d'axes respectifs Y₂₀-Y₂₀, Y₃₀-Y₃₀ de roulement sur le sol S. En pratique, chacune de ces roues 20 et 30 peut présenter des formes de réalisation diverses, tant en ce qui concerne sa partie périphérique extérieure 21, 31 destinée à rouler sur le sol, qui peut être, par exemple, constituée de caoutchouc ou d'un pneu à chambre à air, qu'en ce qui concerne son corps central discoïdal 22, 32, éventuellement ajouré ou rayonné, dont l'axe géométrique central correspond à l'axe de roulement Y₂₀-Y₂₀, Y₃₀-Y₃₀.

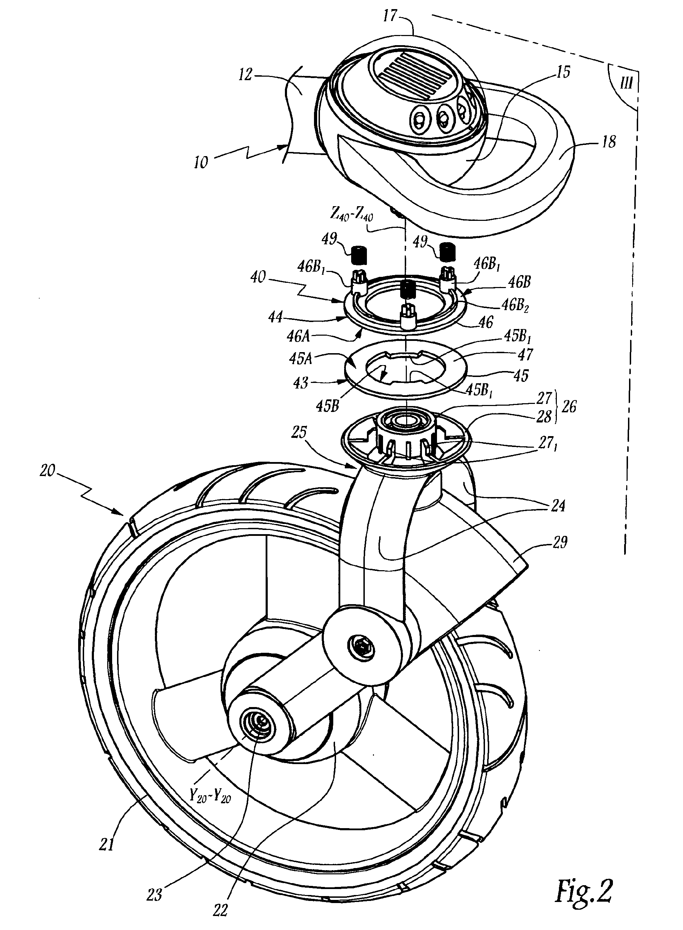

Comme bien visible sur les figures 2 et 3, le corps central 22 de la roue avant 20 est monté de manière rotative sur un moyeu fixe 23 incluant les extrémités libres respectives des branches coudées 24 d'une fourche 25 reliée au bras 12 du cadre 10 par un ensemble d'articulation mécanique 40. La fourche 25 enjambe une portion supérieure de la partie de roulement 21 de la roue 20, avec ses branches 24 s'étendant, au moins en partie, radialement à l'axe de roulement Y₂₀-Y₂₀. A l'opposé de leur extrémité libre, les branches 24 sont reliées rigidement par une tête d'extrémité supérieure 26 de la fourche 25. Cette tête 26 comporte un manchon central 27, depuis lequel s'étend vers l'extérieur une collerette 28 courant sur toute la périphérie extérieure de ce manchon et autour duquel est rapporté un garde-boue 29.

L'ensemble d'articulation 40, qui sera décrit plus bas, est supporté par un embout d'extrémité avant 15 fixé au bras 12 du cadre 10. En pratique, une forme de réalisation consiste à prévoir que cet embout 15 est lié rigidement au bras 12. Selon une autre forme de réalisation, plus sophistiquée et s'apparentant à celle expliquée en détail dans WO-A-2009/092970, cet embout 15 constitue l'extrémité avant d'un arbre monté co-axialement à l'intérieur du bras 12 : cet arbre est fixe par rapport au bras lorsque le châssis 2 est dans sa configuration de service de la figure 1 mais, à des fins d'escamotage de la roue 20, l'arbre précité peut être entraîné en rotation autour de l'axe X₁₂-X₁₂. Le lecteur pourra se reporter au document précité WO-A-2009/092970 pour plus de détails sur cet aspect, le cas échéant.

L'ensemble d'articulation 40 est conçu pour permettre à la roue 20 de pivoter par rapport au cadre 10 autour d'un axe Z₄₀-Z₄₀ qui, sans être sécant avec l'axe de roulement Y₂₀-Y₂₀ de la roue, s'étend de manière sensiblement perpendiculaire à cet axe Y₂₀-Y₂₀. Pour ce faire, dans l'exemple de réalisation considéré ici, l'ensemble d'articulation 40 comporte une tige 41 liée rigidement à l'embout 15, par exemple par emmanchement à force ou par surmoulage. L'axe central longitudinal de cette tige 40 défini l'axe de pivotement Z₄₀-Z₄₀. L'ensemble d'articulation 40 comporte également des paliers 42, ici des roulements à billes, interposés radialement à l'axe Z₄₀-Z₄₀ entre la tige 41 et le manchon 27 de la tête 26 de la fourche 25, ce manchon 27 étant en effet agencé co-axialement autour de la partie basse de la tige 41, comme bien visible sur la figure 3. Les paliers 42 supportent ainsi la tête 26 de la fourche 25, en la guidant en rotation libre autour de la tige 41 qui, en service, est liée fixement au bras 12 par l'embout 15.

Selon l'invention, l'ensemble d'articulation 40 comporte en outre deux platines, à savoir une platine inférieure 43 et une platine supérieure 44. Chaque platine 43, 44 comporte un corps annulaire 45, 46, qui est centré sur l'axe Z₄₀-Z₄₀ et qui présente la forme globale d'un disque évidé dans sa région centrale, comme bien visible sur la figure 2.

Sur son côté dirigé vers la platine 44, la face supérieure 45A du corps 45 de la platine 43 délimite une surface plane 47 qui, dans l'exemple de réalisation considéré ici, occupe avantageusement toute la face précitée 45A. De plus, la périphérie intérieure 45B du corps annulaire 45 est adaptée pour coopérer par complémentarité de formes avec la tête 26 de la fourche 25 pour lier en rotation autour de l'axe de pivotement Z₄₀-Z₄₀ la platine 43 et la roue 20 : plus précisément, comme représenté sur la figure 2, cette périphérie intérieure 45B est pourvue de deux reliefs 45B₁ et 45B₂ radialement saillants vers l'intérieur et diamétralement opposés l'un à l'autre. Chacun de ces reliefs 45B₁ et 45B₂ est dimensionné pour être reçu de manière ajustée entre des nervures 27, réparties suivant la périphérie extérieure du manchon 27, afin de bloquer la rotation relative de la platine 43 et de la tête 26 de la fourche 25 autour de l'axe Z₄₀-Z₄₀.

La platine 44 présente quant à elle, sur son côté dirigé vers la platine 43, une face inférieure 46A qui délimite une surface plane 48 qui, avantageusement, occupe toute la face précitée 46A. De plus, sur sa face supérieure 46B, le corps 46 est pourvu de trois plots 46B₁ axialement saillants vers le haut et répartis suivant la périphérie du corps 46, en étant reliés les uns aux autres par une nervure périphérique 46B₂. Comme représenté sur la figure 3, chaque plot 46B₁ est reçu dans une cavité complémentaire 16 délimitée dans la face inférieure de l'embout 15. De cette façon, la platine 44 est bloquée en rotation autour de l'axe Z₄₀-Z₄₀ par rapport à l'embout 15, ce qui revient à dire que cette platine 44 est, en service, liée en rotation autour de l'axe Z₄₀-Z₄₀ au bras 12, par complémentarité de formes.

Comme bien visible sur la figure 3, les platines 43 et 44 sont juxtaposées l'une au-dessus de l'autre, de manière que leurs surfaces respectives 47 et 48 soient accolées l'une contre l'autre selon un plan d'accolement référencé P sur la figure 3, qui s'étend transversalement, voire, avantageusement comme ici, perpendiculairement à l'axe Z₄₀-Z₄₀. Le contact plan entre les platines 43 et 44 est réalisé de manière pressante, sous l'action de ressorts de compression 49 respectivement interposés, suivant la direction de l'axe Z₄₀-Z₄₀, entre les plots 46B₁ et le fond des cavités de réception 16. De la sorte, sous l'action de ces ressorts de compression 49, la platine supérieure 44 est pressée contre la platine inférieure 43, en maintenant ainsi la surface 48 appuyée contre la surface 47 suivant la direction de l'axe Z₄₀-Z₄₀. Avantageusement, chaque ressort 49 est maintenu transversalement à l'intérieur de la cavité 16, en étant en partie engagé autour de l'extrémité supérieure du plot correspondant 46B₁, dimensionnée en conséquence.

Lorsque la roue 20 pivote par rapport au cadre 10 autour de l'axe Z₄₀-Z₄₀, et ce aussi bien dans un sens que dans l'autre, les paliers 42 autorisent le libre pivotement de cette roue tandis que, dans le même temps, la coopération des platines 43 et 44 induit un freinage et, par là, une stabilisation dynamique du pivotement. Plus précisément, lorsque la roue 20 pivote de la sorte, sa fourche 25 pivote suivant un mouvement correspondant et entraîne en rotation autour de l'axe Z₄₀-Z₄₀ la platine inférieure 43 par rapport à la platine supérieure 44 : la surface 47 glisse alors contre la surface 48, dans le plan d'accolement P, tout en étant freinée par friction entre ces surfaces. De la sorte, toute accélération ou décélération brutale de ce pivotement, liée notamment à des phénomènes vibratoires, oscillatoires ou pendulaires, est inhibée par frottement entre les surfaces 47 et 48, étant bien entendu souligné que ce frottement ne bloque pas pour autant le pivotement, mais se contente de l'adoucir. Cet effet de contact sec, à la fois glissant et frottant, entre les platines 43 et 44 est d'autant plus significatif que, d'une part, les ressorts 49 maintiennent les corps annulaires 45 et 46 en appui pressant l'un contre l'autre et, d'autre part, les surfaces 44 et 48 s'étendent tout autour de l'axe de pivotement Z₄₀-Z₄₀, et ce, à la fois, sur une étendue radiale significative et à bonne distance de l'axe Z₄₀-Z₄₀ puisque les platines 43 et 44 sont agencées extérieurement autour du manchon 27. Autrement dit, l'interface étendue de contact entre les corps annulaires 45 et 46 des platines 43 et 44 entoure extérieurement les paliers 42 et inhibe ainsi les mouvements vibratoires ou pendulaires centrés sur l'axe Z₄₀-Z₄₀, susceptibles d'apparaître dans ces paliers, à la façon d'un guidonnage, lors du pivotement de la roue 20 par rapport au cadre 10.

En pratique, l'effet de contact à la fois glissant et frottant entre les platines 43 et 44 est obtenu de manière satisfaisante en prévoyant que ces platines sont réalisées, au moins pour leur partie délimitant les surfaces 47 et 48, en polyoxyméthylène, tel que le Delrin (marque déposée). En variante, d'autres matériaux peuvent être utilisés : en particulier, une seule des deux platines peut être réalisée en une matière plastique, tandis que l'autre est réalisée en métal.

Par ailleurs, l'effet d'anti-guidonnage obtenu par les platines 43 et 44 permet, avantageusement, de ne prévoir, au sein de l'ensemble d'articulation 40, aucun autre mécanisme bloquant mécaniquement le pivotement de la roue 20 dans une position prédéterminée figée, en particulier dans la position où son axe de roulement Y₂₀-Y₂₀ s'étend perpendiculairement à la direction antéropostérieure du châssis 2. D'ailleurs, dès que le châssis 2 est basculé dans son ensemble vers l'arrière, en décollant du sol S la roue avant 20, cette dernière est avantageusement conçue pour, sous l'effet gravitaire de son propre poids, tendre à aligner son corps 22 dans le plan vertical médian antéropostérieur du châssis, ce qui revient à dire que son axe de roulement Y₂₀-Y₂₀ tend alors à s'étendre perpendiculairement à la direction antéropostérieure du châssis. Cette propension d'alignement spontané de la roue 20 est accentuée par le fait que l'axe de pivotement Z₄₀-Z₄₀ ne s'étend pas de manière rigoureusement perpendiculaire à l'axe X₁₂-X₁₂ du bras 12, mais est incliné légèrement vers l'arrière, en définissant avec l'axe précité un angle aigu. On souligne ici que cette caractéristique de propension à l'alignement de la roue 30 n'est pas limitative de l'invention, dans le sens où les platines 43 et 44 décrites jusqu'ici peuvent bien entendu être intégrées à des cadres de poussette dont la roue associée présenterait un poids trop faible et/ou un diamètre trop petit pour ne pas produire cet effet avantageux.

A titre d'aménagement optionnel avantageux, l'embout 15 est surmonté fixement par un enjoliveur semi-sphérique 17 recouvrant l'ensemble d'articulation 40. Sur son côté opposé suivant la direction de l'axe Z₄₀-Z₄₀, l'embout 15 est habillé par la collerette 28 qui forme ainsi un enjoliveur opposé à l'enjoliveur 17: moyennant des conformations adéquates respectives de la face latérale de l'embout 16 et de la collerette 28, cet embout et cette collerette définissent, conjointement avec l'enjoliveur 17, une enveloppe extérieure sphérique à l'intérieur de laquelle est logé, pour l'essentiel, l'ensemble de l'articulation 40, notamment à l'intérieur de laquelle sont logés en totalité les platines 43 et 44, ainsi que les ressorts de compression 49. Cette enveloppe extérieure sphérique produit un effet de « signature visuelle », propre au châssis de poussette 2, les platines 43 et 44 étant agencées et dimensionnées en occupant au mieux la portion inférieure de cette enveloppe.

Avantageusement, afin de disposer d'un feu d'avertissement lumineux, une source lumineuse ainsi qu'une cellule photovoltaïque d'alimentation électrique de cette source sont agencés à l'intérieur de l'enveloppe sphérique précitée. Des modalités détaillées pour réaliser un tel feu d'avertissement sont données dans WO-A-2006/111656 auquel le lecteur peut se référer.

De même, à titre d'aménagement optionnel avantageux, l'embout 15 est prolongé, vers l'avant, par une poignée 18 liée rigidement à cet embout, en étant par exemple directement venue de matière avec l'embout. Cette poignée 18 se présente ici sous la forme d'un arceau qui s'étend le long de la portion d'extrémité avant de l'embout et suivant une direction globalement périphérique à cet embout, tout en ménageant entre eux un espace suffisant pour que l'utilisateur puisse y introduire les doigts d'une de ses mains afin de saisir la poignée. Les intérêts de la poignée 18 sont détaillés dans WO-A-2009/092970 auquel le lecteur peut se référer.

Divers aménagements et variantes au châssis de poussette 2 décrit jusqu'ici sont par ailleurs envisageables. Le lecteur pourra notamment se reporter aux documents précédemment cités WO-A-2006/111656 et WO-A-2009/092970, ainsi qu'au document WO-A-2008/099095. En particulier, à titre d'exemples :
- comme déjà évoqué plus haut, on souligne que l'agencement à platines 43 et 44 s'intègre aussi bien dans le mécanisme d'articulation d'une roue escamotable que dans le mécanisme d'articulation d'une roue non escamotable vis-à-vis du cadre du châssis ;
- plutôt que d'agir sur la platine 44 pour l'appuyer contre la platine 43, les ressorts 49 peuvent être interposés entre la roue 20 et la platine 43 afin d'appuyer cette dernière contre la platine 44 ; plus généralement, la structure à tige 41 et à manchon 27 peut être inversée entre le cadre 10 et la roue 20, du moment que le ou les paliers 42 radialement interposés entre eux soient entourés extérieurement par les platines 43 et 44 ;
- plutôt que les platines 43 et 44 soient réalisées sous la forme de deux pièces distinctes, rapportées au châssis de poussette comme décrit en regard des figures, l'une d'elles peut, en variante non représentée, être directement venue de matière, notamment venue de moulage, avec soit la fourche 25, soit l'embout 15, tandis que l'autre platine, qui est alors liée en rotation autour de l'axe Z₄₀-Z₄₀ à, respectivement, l'embout ou la fourche, serait mise en pression contre la platine venue de matière sous l'action de moyens élastiques fonctionnellement analogues aux ressorts de compression 49 ;
- plutôt que de prévoir plusieurs petits ressorts 49, répartis suivant la périphérie des corps annulaires 45 et 46 des platines 43 et 44, une variante consiste à ne prévoir d'un seul ressort de compression, qui est agencé de manière centrée sur l'axe de pivotement Z₄₀-Z₄₀ et dont la spire d'extrémité, tournée vers les platines, vient s'appuyer sur l'un des corps annulaires des platines, en courant le long de tout le périmètre de ce corps ;
- l'invention ne se limite pas aux châssis de poussette présentant une unique roue avant ; en particulier, l'invention s'applique aux châssis équipés de deux roues avant situées de part et d'autre et à distance du plan vertical médian antéropostérieur de ce châssis ;
- la roue avant 20 ou chacune des roues avant évoquées juste ci-dessus peuvent être remplacées par une paire de roues jumelées, voire un train de roues jumelées ;
- la forme de la pièce allongée reliant le moyeu fixe 23 de la roue 20 à l'ensemble d'articulation 40 n'est pas limitée à une fourche, telle que la fourche 25 ; en particulier, cette fourche 25 peut être remplacée par un unique bras ; et/ou
- à la différence de la forme de réalisation montrée sur les figures, l'axe Z₄₀-Z₄₀ de pivotement entre la roue 20 et le cadre 10 peut intersecter l'axe de roulement Y₂₀-Y₂₀ de la roue.

## Revendications

1. Châssis de poussette (2), notamment pour transporter un enfant, comportant un cadre (10) et au moins une roue (20) d'appui au sol (S), reliés l'un à l'autre par un ensemble d'articulation mécanique (40) définissant un axe de pivotement (Z₄₀-Z₄₀), qui s'étend de manière sensiblement perpendiculaire à l'axe (Y₂₀-Y₂₀) de roulement de la roue sur le sol et autour duquel le cadre et la roue pivotent l'un par rapport à l'autre, et comportant au moins un palier (42) pour guider en rotation libre autour de l'axe de pivotement (Z₄₀-Z₄₀) le cadre et la roue l'un par rapport à l'autre,
**caractérisé en ce que** l'ensemble d'articulation (40) comporte en outre :
- deux platines (43, 44), incluant chacune un corps annulaire (45, 46), qui est sensiblement centré sur l'axe de pivotement (Z₄₀-Z₄₀) et qui est agencé extérieurement autour du ou des paliers (42), ces deux corps annulaires étant liés en rotation autour de l'axe de pivotement (Z₄₀-Z₄₀) à, respectivement, le cadre (10) et la roue (20), et délimitant respectivement, sur l'une (45A, 46A) de leurs faces d'extrémité axiale, des surfaces sensiblement planes (47, 48) qui sont accolées l'une contre l'autre selon un plan d'accolement (P) transversal à l'axe de pivotement et qui coopèrent l'une avec l'autre par contact de glissement et de frottement, et
- des moyens élastiques (49) pour presser les corps annulaires respectifs (45, 46) des platines (43, 44) l'un contre l'autre et maintenir ainsi les surfaces planes (47, 48) appuyées l'une contre l'autre suivant la direction de l'axe de pivotement (Z₄₀-Z₄₀).

2. Châssis de poussette suivant la revendication 1, **caractérisé en ce que** les surfaces planes (47, 48) coopèrent l'une avec l'autre par contact sec.

3. Châssis de poussette suivant l'une des revendications 1 ou 2, **caractérisé en ce que** les platines (43, 44) sont deux pièces distinctes, respectivement rapportées à la roue (20) et au cadre (10).

4. Châssis de poussette suivant l'une des revendications 1 ou 2, **caractérisé en ce que** l'une des deux platines est venue de matière avec une pièce soit de la roue, soit du cadre, l'autre platine étant alors rapportée à, respectivement, le cadre ou la roue.

5. Châssis de poussette suivant l'une quelconque des revendications précédentes, **caractérisé en ce que** chaque surface plane (47, 48) s'étend tout autour de l'axe de pivotement (Z₄₀-Z₄₀).

6. Châssis de poussette suivant l'une quelconque des revendications précédentes, **caractérisé en ce que** le ou les paliers (42) sont interposés, radialement à l'axe de pivotement (7₄₀-Z₄₀), entre une tige centrale (41) et un manchon (27) qui sont tous les deux centrés sur l'axe de pivotement et qui sont respectivement et indifféremment fixés au cadre et à la roue, et **en ce que** les corps annulaires respectifs (45, 46) des platines (43, 44) sont agencés extérieurement autour du manchon (27).

7. Châssis de poussette suivant l'une quelconque des revendications précédentes, **caractérisé en ce que** les corps annulaires respectifs (45, 46) des platines (43, 44) sont respectivement liés en rotation au cadre (10) et à la roue (20) par complémentarité de formes.

8. Châssis de poussette suivant les revendications 6 et 7 prises ensemble, **caractérisé en ce que** le manchon (27) est pourvu d'au moins un relief extérieur (47₁) adapté pour coopérer avec un relief ajusté (45B₁, 45B₂) de la périphérie intérieure (45B) d'un (45) des deux corps annulaires (45, 46) de manière à lier en rotation le manchon et la platine correspondante (43).

9. Châssis de poussette suivant soit les revendications 6 et 7 prises ensemble, soit la revendication 8, **caractérisé en ce que** la tige centrale (41) est solidaire d'un embout (15) dans lequel sont délimitées des cavités (16) de réception de plots complémentaires (46B₁) qui s'étendent en saillie de la face d'extrémité axiale (46B) d'un (46) des deux corps annulaires (45, 46), opposée à sa surface plane (48), de manière à lier en rotation la tige et la platine correspondante (44).

10. Châssis de poussette suivant l'une quelconque des revendications précédentes, **caractérisé en ce que** les moyens élastiques incluent au moins un ressort de compression (49) interposé, suivant la direction de l'axe de pivotement (Z₄₀-Z₄₀), soit entre le cadre (10) et le corps annulaire (46) de la platine (44), lié en rotation au cadre, soit entre la roue (20) et le corps annulaire (45) de la platine (43), lié en rotation à la roue.

11. Châssis de poussette suivant les revendications 9 et 10 prises ensemble, **caractérisé par** plusieurs ressorts de compression (49), chacun d'eux étant maintenu transversalement à l'intérieur d'une des cavités (16) délimitées dans l'embout (15).

12. Châssis de poussette suivant la revendication 10, **caractérisé par** un unique ressort de compression, qui est sensiblement centré sur l'axe de pivotement (Z₄₀-Z₄₀) et dont la spire d'extrémité, tournée vers les platines (43, 44), court le long du périmètre du corps annulaire (45, 46) d'une des platines.

13. Châssis de poussette suivant l'une quelconque des revendications précédentes, **caractérisé en ce que** chaque platine (43, 44) est réalisée, au moins pour la partie de son corps annulaire (45, 46) délimitant la surface plane correspondante (47, 48), en polyoxyméthylène, tel que le Delrin (marque déposée).

14. Châssis de poussette suivant l'une quelconque des revendications précédentes, **caractérisé en ce que** l'ensemble d'articulation (40) est supporté par un embout (15) fixé à une partie terminale (12) du cadre (10) et lié en rotation à la platine correspondante (44), l'ensemble d'articulation étant au moins en partie recouvert, de part et d'autre, suivant l'axe de pivotement (Z₄₀-Z₄₀), de cet embout, par un premier enjoliveur (17) solidaire de l'embout et par un second enjoliveur (28) solidaire d'un moyeu fixe (23) de la roue (20), ces premier et second enjoliveurs définissant, conjointement avec l'embout, une enveloppe extérieure sensiblement sphérique à l'intérieur de laquelle sont logés en totalité les platines (43, 44) et les moyens élastiques (49).

15. Châssis de poussette suivant l'une quelconque des revendications précédentes, **caractérisé en ce que** la roue (20) est pourvue d'une pièce allongée (25), telle qu'une fourche ou un bras, qui relie un moyeu fixe (23) de cette roue et l'ensemble d'articulation (40), et dont une extrémité (26) est à la fois liée en rotation à la platine correspondante (43) et supportée par le ou les paliers (42) qui sont montés autour d'une tige (41) appartenant à l'ensemble d'articulation (40), qui est fixée au cadre (10) et centrée sur l'axe de pivotement (Z₄₀-Z₄₀).

## Patentansprüche

1. Chassis (2) für einen Wagen, insbesondere zum Transport eines Windes, einen Rahmen (10) und mindestens ein Rad (20) zum Abstützen am Boden (S) umfassend, die miteinander durch eine mechanische Gelenkanordnung (40) verbunden sind, die eine Schwenkachse (Z₄₀-Z₄₀) definiert, die sich in einer im Wesentlichen senkrechten Weise zur Drehachse (Y₂₀-Y₂₀) des auf dem Boden erstreckt und um die der Rahmen und das Rad retativ zueinander schwenken, und mindestens ein Lager (42) umfassend, um den Rahmen und das Rad relativ zueinander in freier Drehung um die Schwenkachse (2₄₀-2₄₀) zu führen, **dadurch gekennzeichnet, dass** die Gelenkanordnung (40) außerdem umfasst:
- zwei Platten (43, 44), die jeweils einen Ringkörper (45, 46) einschließen, der im Wesentlichen auf die Schwenkachse (Z₄₀-Z₄₀) zentriert ist und der außen um das oder die Lager (42) herum angeordnet ist, wobei die zwei Ringkörper drehfest um die Schwenkachse (Z₄₀-Z₄₀) mit jeweils dem Rahmen (10) und dem Rad (20) verbunden sind und jeweils auf einer (45A, 46A) ihrer axialen Endflächen im Wesentlichen ebene Flächen (47, 48) begrenzen, die einer quer zur Schwenkachse liegenden Grenzflächenebene (P) aneinanderliegen und die miteinander über einen Gleit- und Reibkontakt zusammenarbeiten, und
- elastische Mittel (49), um die jeweiligen Ringkörper (45, 46) der Platten (43, 44) gegeneinanderzudrücken und so die sich aufeinander abstützenden ebenen Flächen (47, 48) gemäß der Richtung der Schwenkachse (Z₄₀-Z₄₀) zu halten.

2. Chassis für einen nach Anspruch 1, **dadurch gekennzeichnet**, die ebenen Flächen (47, 48) miteinander über trockenen Kontakt zusammenarbeiten.

3. Chassis für einen nach einem der Ansprüche 1 oder 2, **dadurch gekennzeichnet**, die Platten (43, 44) zwei getrennte Teile sind, die jeweils an das Rad (20) und an den Rahmen (10) angesetzt sind.

4. Chassis für einen Wagen nach einem der Ansprüche 1 oder 2, **dadurch gekennzeichnet, dass** eine der zwei Platten aus einem Stück mit einem Teil, sei es das Rad, sei es der Rahmen, hergestellt ist, wobei die andere Platte dann jeweils am Rahmen oder am Rad angesetzt ist.

5. Chassis für einen Wagen nach einem beliebigen der vorhergehenden Ansprüche, **dadurch gekennzeichnet**, dassjede ebene Fläche (47, 48) sich ganz um die Schwenkachse (Z₄₀-Z₄₀) herum erstreckt.

6. Chassis für einen Wagen einem beliebigen der vorhergehenden Ansprüche, **dadurch gekennzeichnet, dass** das oder die Lager (42) radial zur Schwenkachse (Z₄₀-Z₄₀) zwischen einem Mittefstab (41) und einem Stutzen (27) angeordnet sind, die beide auf die Schwenkachse zentriert sind und die jeweils und indifferent an dem Rahmen und dem Rad befestigt sind, und dass die jeweiligen Ringkörper (45, 46) der Platten (43, 44) außen um den Stutzen (27) herum angeordnet sind.

7. Chassis für einen Wagen nach einem beliebigen der vorhergehenden Ansprüche, **dadurch gekennzeichnet, dass** die jeweiligen Ringkörper (45, 46) der Platten (43, 44) jeweils drehfest mit dem Rahmen (10) und dem Rad (20) durch Formenschluss verbunden sind.

8. Chassis für einen Wagen nach den Ansprüchen 6 und 7 zusammen, **dadurch gekennzeichnet, dass** der Stutzen (27) mit mindestens einem Außenrelief (47₁) versehen ist, das geeignet ist, mit einem angepassten Relief (45B₁, 45B₂) des Innenumfangs (45B) eines (45) der zwei Ringkörper (45, 46) zusammenzuarbeiten, um den Stutzen und die korrespondierende Platte (43) drehfest zu verbinden.

9. Chassis für einen nach den Ansprüchen 6 und 7 zusammen oder nach Anspruch 8, **dadurch gekennzeichnet, dass** der Mittelstab (41) mit einem Ansatz (15) verbunden ist, in dem Hohlräume (16) zur Ausnahme von komplementären Ansatzstücke (46B₁) begrenzt sind, die sich aus der axialen Endfläche (46B), die der ebenen Fläche (48) gegenüberliegt, eines (46) der zwei Ringkörper (45, 46) hervorspringend erstrecken, um den Stab und die korrespondierende Platte (44) drehfest zu verbinden.

10. Chassis für einen Wagen nach einem beliebigen der vorhergehenden Ansprüche, **dadurch gekennzeichnet, dass** die elastischen Mittel mindestens eine Druckfeder (49) einschließen, die gemäß der Richtung der Schwenkachse (Z₄₀-Z₄₀), sei es zwischen dem Rahmen (10) und dem Ringkörper (46) der Platte (44), der drehfest mit dem Rahmen verbunden ist, sei es zwischen dem Rad (20) und dem Ringkörper (45) der Platte (43), der drehfest mit dem Rad verbunden ist, angeordnet ist.

11. Chassis für einen Wagen nach den Ansprüchen 9 und 10 zusammen, **gekennzeichnet durch** mehrere Druckfeder (49), wobei jede derselben quer im Inneren eines der Hohlräume (16) gehalten wird, die in dem Ansatz (15) begrenzt sind.

12. Chassis für einen Wagen nach Anspruch 10, **gekennzeichnet durch** eine einzige Druckfeder, die im Wesentlichen auf die Schwenkachse (Z₄₀-Z₄₀) zentriert ist und deren zu den Platten (43, 44) gerichtete Endwindung längs des Umfangs eines Ringkörpers (45, 46) einer der Platten entlangläuft.

13. Chassis für einen Wagen nach einem beliebigen der vorhergehenden Ansprüche, **dadurch gekennzeichnet, dass** jede Platte (43, 44) mindestens für den Bereich ihres Ringkörpers (45, 46), der die korrespondierende ebene Fläche (47, 48) begrenzt, aus Polyoxymethylen, wie Delrin (geschützte Marke), hergestellt ist.

14. Chassis für einen Wagen nach einem beliebigen der vorhergehenden Ansprüche, **dadurch gekennzeichnet, dass** die Gelenkanordnung (40) durch einen Ansatz (15) getragen wird, der an einem Endbereich (12) des Rahmens (10) befestigt ist und drehfest mit der korrespondierenden Platte (44) verbunden ist, wobei die Gelenkanordnung mindestens teilweise beidseitig dieses Ansatzes gemäß der Schwenkachse (Z₄₀-Z₄₀) von einer ersten Abdeckkappe (17), die mit dem Ansatz verbunden ist, und einer zweiten Abdeckkappe (28), die mit einer feststehenden Nabe (23) des Rades (20) verbunden ist, bedeckt ist, wobei diese erste und zweite Abdeckkappe zusammen mit dem Ansatz eine im Wesentlichen sphärische Umhüllung bilden, in deren Innerem die Gesamtheit der Platten (43, 44) und der elastischen Mittel (49) ausgenommen sind.

15. Chassis für einen Wagen nach einem beliebigen der vorhergehenden Ansprüche, **dadurch gekennzeichnet, dass** das Rad (20) mit einem gestreckten Teil (25), wie einer Gabel oder einem Arm, versehen ist, das eine feste Nabe (23) dieses und die Gelenkanordnung (40) verbindet und dessen eines Ende (26) sowohl drehfest mit der korrespondierenden Platte (43) verbunden ist als auch durch das oder die Lager (42) gestützt ist, die um einen zu der Gelenkanordnung (40) gehörenden Stab (41) montiert sind, der mit dem Rahmen (10) verbunden ist und auf die Schwenkachse (Z₄₀-Z₄₀) zentriert ist.

## Claims

1. A stroller chassis (2), in particular for transporting a child, comprising a frame (10) and at least one wheel (20) resting on the ground (S), which are connected to each other by a mechanical hinge assembly (40) defining a pivoting axis (Z₄₀-Z₄₀), which extends perpendicularly to the wheel rolling axis (Y₂₀-Y₂₀) on the ground and around which the frame and the wheel pivot with respect to one another, and comprising at least one bearing (42) for guiding the frame and the wheel in free rotation around said pivoting axis (Z₄₀-Z₄₀) with respect to each other,
**characterized in that** the hinge assembly (40) also comprises:
- two plates (43, 44), each including an annular body (45, 46), which is centered substantially with respect to the pivoting axis (Z₄₀-Z₄₀) and which is arranged externally around the bearings (42), said two annular bodies being connected rotatably around the pivoting axis (Z₄₀-Z₄₀) to the frame (10) and the wheel (20) respectively, and defining respective substantially planar surfaces (47, 48) on one (45A, 46A) of the axial end surfaces thereof, said planar being mutually adjoining along an adjoining plane (P), which is transverse to the pivoting axis, cooperating with one another by means of sliding and frictional contact, and
- resilient means (49) for pressing the respective annular bodies (45, 46) of the plates (43, 44) against other and thus maintaining the planar surfaces (47, 48) applied each other in the direction of the pivoting axis (Z₄₀-Z₄₀).

2. The stroller chassis according to claim 1, **characterized in that** the planar surfaces (47, 48) cooperate with each other by dry contact.

3. The stroller chassis according to one of claims 1 or 2, **characterized in that** the plates (43, 44) are two separate pieces, respectively connected to the wheel (20) and the frame (10).

4. The stroller according to one of claims 1 or 2, **characterized in that** one of the two plates is integral with a piece either of the wheel or the frame, the other plate then being attached to the frame or the wheel, respectively.

5. The stroller chassis according to any one of the preceding claims, **characterized in that** each surface (47, 48) extends all around the pivoting axis (Z₄₀-Z₄₀).

6. The stroller chassis according to any one of the preceding claims, **characterized in that** the bearing(s) (42) are inserted, radially to the pivoting axis (Z₄₀-Z₄₀), between a central rod (41) and a sleeve (27) that are both centered on the pivoting axis and that are respectively and indifferently fastened to the frame and the wheel, and **in that** the respective annular bodies (45, 46) of the plates (43, 44) are arranged outwardly around the sleeve (27).

7. The stroller chassis according to any one of the preceding claims, **characterized in that** the respective annular bodies (45, 46) of the plates (43, 44) are respectively rotatably connected to the frame (10) and the wheel (20) through complementary shapes.

8. The stroller chassis according to claim 6 and 7 together, **characterized in that** the sleeve (27) is provided with at least one outer raised portion (47₁) adapted so cooperate with an adjusted raised portion (45B₁, 45B₂) of the inner periphery (45B) of one (45) of the two annular bodies (45, 46) so as to rotatably connect the sleeve and the corresponding plate (43).

9. The stroller according either to claims 6 and 7 together, or claim 8, **characterized in** the central rod (41) is secured to a tip (15) in which cavities (16) are defined for receiving complementary studs (46B₁) that extend protruding from the axial end surface (46B) of one (46) of the two annular bodies (45, 46), opposite its planar surface (48), so as to rotatably connect the rod and the corresponding plate (44).

10. The stroller chassis according to any one of the preceding claims, **characterized in that** the resilient means include at least one compression spring (49) inverted, along the direction of the pivoting axis (Z₄₀-Z₄₀), either between the frame (10) and the annular body (46) of the plate (44), rotatably connected to the frame, or between the wheel (20) and the annular body (45) of the plate (43), connected to the wheel.

11. The stroller chassis according to claim 9 and 10 to together, **characterized by** several compression springs (49), each of them being transversely maintained inside one of the cavities (16) defined in the tip (15).

12. The stroller chassis according to claim 10, **characterized by** a single compression spring, which is substantially centered on the pivoting axis (Z₄₀-Z₄₀) and whereof the end turn, turned the plates (43, 44), runs along the perimeter of the annular body (45, 46) of one of the plates,

13. The stroller according to any one of the preceding claims, **characterized in that** each plate (43, 44) is made, at least for the portion of its annular body (45, 46) defining the corresponding planar surface (47, 48), from polyoxymethylene, such as Delrin (registered trademark).

14. The stroller chassis according to any one of the preceding claims, **characterized in** the hinge assembly (40) is supported by a tip (15) secured to an end portion (12) of the frame (10) and rotatably connected to the corresponding plate (44), the hinge assembly being at least partially covered, on either side, along the pivoting axis (Z₄₀-Z₄₀), of that tip, by a first trim (17) secured to the tip and by a second trim (28) secured to a stationary hub (23) of the heel (20), these first and second trims defining, jointly with the tip, a substantially spherical outer enclosure inside which all of the plates (43, 44) and the resilient means (49) are housed.

15. The stroller chassis according to any one of the preceding claims, **characterized in that** the wheel (20) is provided with an elongate piece (25), such as a fork or an arm, that connects a stationary hub (23) of that wheel and the hinge assembly (40), and whereof one end (26) is both rotatably connected to the corresponding plate (43) and supported by the bearing(s) (42) that are mounted around a rod (41) belonging to the hinge assembly (40), which is secured to the frame (10) and centered on the pivoting axis (Z₄₀-Z₄₀).
